# EUROPEAN PATENT APPLICATION

(11) **EP 2 105 338 A2**
(43) Date of publication of application: **30.09.2009**
(21) Application number: 09075084.5
(22) Date of filing: 24.02.2009
(51) Int. Cl.: B60K 35/00, B60K 37/00

(54) **Portable driving aid**

(30) Priority: 28.02.2008 GB 0803675
(71) Applicant: Reason, Colin Andrew, Waterlooville, Hampshire PO7 5HH (GB)
(72) Inventor: Jones, Justin, * (GB); Strange, Andrew, * (GB); Tinsley, Tom, * (GB); Page, Vince Kevin, * (GB)

(57) **Abstract**

A Portable Driving Aid is presented that requires no set-up and can operate without the need of external signal inputs or direct connectivity to the respective vehicles ECU, on-board computer or sensors, where the driver's driving style is displayed using a multicolour display and or heard as an audible tone. The colour display is updated in real time to provide a dynamic indication to the user of their driving style. The colour used is instantly recognisable by the user and requires no concentration or interpretation, unlike traditional dials or displays and as such, the unit can be located anywhere in the user's field of vision, including peripheral. The audible tone is set at a level and pitch that although heard by the user, will not cause minimal distraction to the user whilst driving the vehicle. The device incorporates an accelerometer and microprocessor, and requires no calibration or initial set-up. The unit design is such that it can be placed in any orientation and still function correctly.

## Description

### 1. BACKGROUND OF THE INVENTION

It is well known within the motoring industry that the manner in which a vehicle is driven, directly effects its fuel consumption. As such, manufacturers quote fuel consumption figures for different driving environments e.g. urban driving, motorway driving. As well as the driving conditions a person's "driving style" also has a direct impact on the vehicles fuel consumption. Higher fuel consumption also results in higher emissions, which adversely affects the environment and subsequently increases the driver's carbon footprint. A person's driving style is defined by how sharply they accelerate and brake, their speed, and excessive or heavy cornering. All these factors add up to have an overall effect on the fuel consumption of the vehicle being driven, e.g. published research has shown that avoiding sharp braking and acceleration can save as much as 30% on fuel costs.

A visual and or audible indication that can alert the driver when acceleration, braking or cornering reach "excessive" levels can help "educate" the driver to reduce such driving practices and improve their "driving style". Such improvements will inevitably lead to increased fuel economy and a lower, individual, carbon footprint. In addition to this, vehicle wear is reduced e.g. reduced tyre wear, leading to reduced motoring costs and increased vehicle life. As well as providing instantaneous feedback on current driving manoeuvres, a visual indication that tracks the driver's "driving style" over time will allow improvements or deterioration in the "driving style" to be monitored.

Driving requires a high level of concentration and it has been shown that distractions should be avoided whilst driving e.g. mobile phones. As such any visual indication should be in a form that presents very little distraction to the user but conveys information in a format that is easy to understand.

Therefore the present invention, here in described, addresses these issues by offering a portable driving aid that is easy to use, requires no set up and can be transferred from vehicle to vehicle, providing information to the user in an clear and concise format that provides minimal distraction to the user driving the vehicle, ensuring that the vehicle remains safely under the users control.

### 2. BACKGROUND DESCRIPTION OF PRIOR ART

There are a number of different driving aids of various designs and configurations known in the prior art. By way of an example, the following cited prior art systems are listed along with a brief description of their features and how the present invention differentiates from these by providing a stand alone portable embodiment of a driving aid:
Patent Number: WO0007150 (VAN DER VOORT MASCHA CECILE; MAARSEVEEN MARTINUS FRANCISCUS; DOUGHERTY MARK SEBASTIAN).
Title: System and method for driving a motor vehicle in an efficient manner.

However, the design of this system is complex and requires up to 11 inputs (or registration means) from the vehicle to determine the users driving style.

In addition, due to the nature of the disclosed design the system is specifically "built-in" to a particular motor vehicle and is therefore not portable and cannot be transferred from vehicle to vehicle.

In contrast, the present invention provides the user with feedback on their driving style as a stand-alone device and operates without the need of external signal inputs or direct connectivity to the respective vehicles ECU, on-board computer or sensors.

In addition the present invention has the added advantage that it is portable and therefore can be transferred from vehicle to vehicle by the user.
Patent Number: EP1718499 (ANDERSSON JON; CARLSSON ULF).
Title: Indicating ecological and economical driving of a vehicle.

Shows a method of indicating ecological and economical driving to a driver in a vehicle, engine speed and engine power are monitored, and engine speed is displayed on an indicator. An optimal engine speed interval from ecological and economical point of view is defined in response to an actual engine power value, and the engine speed value and the optimal engine speed interval are compared. A segment of at least one of a number of light emitting elements on the indicator is illuminated in correspondence to the optimal engine speed interval in case the actual engine speed value is outside the optimal engine speed interval to alert the driver to adjust the engine speed to within the optimal engine speed interval. In response to the engine speed being inside the optimal engine speed interval, the illumination of the segment is switched off. Vehicle speed is also monitored and the light emitting elements are maintained switched off in response to the vehicle speed being lower than a predetermined value.

However, the design approach of this system is to ensure that the vehicle is kept in the optimum gear for the current vehicle/engine speed; by ensuring the correct gear is selected and thus emissions from the engine are kept at a minimum. The system provides no feedback on excessive acceleration/braking or corning forces, which contribute to excessive vehicle emissions.

Due to the nature of the disclosed design the system is specifically "built-in" to a particular motor vehicle and is therefore not portable and cannot be transferred from vehicle to vehicle.

In contrast, the present invention measures acceleration and deceleration forces to ensure that these are within predetermined limits, that in itself ensures minimal emissions from the vehicle and hence the vehicle is driven in an economical way.

The present invention is a stand-alone device and operates without the need of external signal inputs or direct connectivity to the respective vehicles ECU, on-board computer or sensors.

In addition the present invention has the added advantage that it is portable and therefore can be transferred from vehicle to vehicle by the user.
Patent Number: KR970003555B (JANG JAE-YOUNG).
Title: Warning device against non-economical driving of an automobile.

Disclosed is an apparatus to alarm when a car is driven uneconomically. The apparatus further comprises a voice generation controller, a selection switch, an uneconomical drive alarm lamp and an economical drive lamp. The voice generation controller, which is controlled, by an input/output controller generates voice via micro speaker. The selection switch is connected between the voice generation controller and the input/output controller. A CPU sequentially performs steps of idling decision, sudden starting/accelerating decision overspeed decision, voice /lamp control. Thereby, the drive is performed economically and conveniently.

The full patent text is unavailable; however, the design of this system requires connectivity to the vehicles ECU, on-board computer or sensors to make a decision on vehicle idling and measure vehicle speed. Therefore due to the nature of the disclosed design it is specifically "built-in" to a particular motor vehicle and is therefore not portable and cannot be transferred from vehicle to vehicle.

In contrast, the present invention provides the user with feedback on their driving style as a stand-alone device and operates without the need of external signal inputs or direct connectivity to the respective vehicles ECU, on-board computer or sensors.

In addition the present invention has the added advantage that it is portable and therefore can be transferred from vehicle to vehicle by the user.

### 3. SUMMARY OF THE INVENTION

The present invention relates to various embodiments of a Portable Driving Aid that provides information to the user on their driving style of a motor vehicle in the form of a clearly visible colour display.

The colour displayed by the present invention can be continuous and can also vary in colour depending on how well the motor vehicle is being driven, providing the user with constant feedback on their driving style.

This method provides a clear, simple and safe method of indication by displaying the driving style in either full view, or in the user's peripheral vision, presenting minimal distraction to the user from the concentration required for safe vehicle control.

The present invention can monitor the driving style in real time and over different time periods, for instance over one journey or many journeys.

In addition, the present invention can provide an instant pulse of varying colour to indicate when the driving style has suddenly changed, for instance, has improved or degraded.

Furthermore, the information provided by the present invention in the form of an instant pulse or continuous colour display allows the user to make a decision to change their driving style if they so wish, for instance, to make a positive improvement in their driving style.

A positive improvement or change to the driving style can improve the efficiency and reduce deterioration of the motor vehicle, resulting in safer driving, reduced running costs and improved fuel economy, reduced emissions to the environment and less Carbon Dioxide output to the atmosphere.

This visual method of conveying information to the user on their driving style where by the display feedback method offers an instant evaluation on their driving style by the viewing of a colour or change of colour.

Where as prior art dials or digital displays and other performance indicators can sometimes be difficult to read or interpret.

The present invention responds to these problems by providing a varying colour display, which indicates the driving style level of the user.

The present invention also provides an instant pulse of varying colour, indicating when the driving style has improved or has degraded.

The present invention uses a 3-axis accelerometer; this has the advantage to operate irrespective of how the present invention is installed. This will allow the product to be installed horizontally, vertically, sideways or in any 360°degree orientation. The microprocessor measures each axis (X,Y,Z) of the accelerometer independently and these three measurements represent the total acceleration in Cartesian coordinates. As acceleration is a vector quantity the Cartesian measurements are converted in a single vector. The resulting vector is a sum (vector sum) of all acceleration vectors acting upon the vehicle at a given time. One acceleration vector is a known quantity namely the acceleration due to the earth's gravity "g", which acts at all time and always in a known direction. This information can be used to resolve the measured acceleration vector into its components. One component is the earth's gravity "g" and another being the acceleration/deceleration or cornering acceleration of the vehicle. If the vehicle being monitored is at rest the only acceleration measured is that of the earth's gravity. The use of vectors allows the device to be mounted in any orientation within the vehicle, where it will still function correctly.

Alternatively a single or two axes accelerometer can be used to perform the measurements, but this would require the device to be specifically orientated within the motor vehicle.

The present invention uses a micro controller or microprocessor to perform signal processing on the output of the accelerometer to calculate the current driving style and set the colour of the colour display.

Alternatively, a digital processing unit (DSP) or analogue-processing unit could perform this function.

The present invention has the advantage that it requires no set up or connection to the motor vehicle it operates within and the device can operate stand-alone without the necessity of external signal inputs or connectivity.

The present invention also has the advantage that it requires no input data from the user to set-up the device prior to it being used for its intended purpose, making it simple to use.

The present invention uses a pre-programmed algorithm to control the colour display in accordance with the driving style of the user. The specific algorithm or formula is not key to the function of the present invention; any of several known algorithms, or algorithms that may be developed in the future, may also be programmed into the micro controller.

The present invention is not limited to the use with a motor vehicle; an alternative embodiment of the present invention can be used with any other forms of transportation, motorcycle, train, boat or aeroplane, by simply re-programming the algorithm to suit the desired levels for that particular application.

The present invention may be incorporated into other portable consumer electronic devices fitted within a motor vehicle; including satellite navigation systems and stereos.

The common theme between each of the embodiments of the present invention is the provision of a portable device with a clear and concise colour display; the colour of the display corresponds to the driving style of the user.

The colour display may show a variable blend of colour to denote the driving style of the user, where "Red" may indicate poor driving, indicating that improvement is needed, where "Red" to "Yellow" may indicate that some improvement has been achieved and "Green" to "Yellow" may indicate a deterioration. "Green" may indicate the desired level or consistent level of driving style has been achieved.

The colour shown in the display window of the present invention can also pulse when the driving style has suddenly changed, where a "RED" pulse may indicate the driving style has degraded, where as a "GREEN" pulse may indicate consistently good driving style.

In the present invention the long term driving style colour and the sudden pulse colour may have different luminous intensity so one colour can be distinguished from the other, presenting the long term driving style luminous intensity may be set at 50% percent, where the sudden change in driving style pulse may be set at 100% percent.

In the preferred embodiment the colour display section may be elliptical in shape, alternatively, it could be square, round or any other shape.

The device may have a rechargeable battery or other means of power generation; solar, thermal and kinetic energy.

The preferred embodiment of the present invention can be stored in a holder or stand, the holder or stand allows the present invention to be mounted anywhere in a motor vehicle; on the windscreen, dashboard or industry standard cigarette lighter socket.

The present invention may have a re-set button to clear any long term driving style information from the memory, so if the user wanted to allow the device to be used by another person or transfer the device into a new vehicle and start a new driving profile.

Alternatively, the user can also transfer the present invention to another vehicle retaining his or her current stored driving profile.

The present invention may have other conventional features installed; for measuring a battery charge level or a battery charging circuit.

The present invention may also have a speaker or audible transducer to indicate a change in the driving style, so if the driving style suddenly degrades then the user will hear a warning in the form of an audible tone.

The present invention may use the function of the accelerometer as a mode switch and user interface; such that "one" short tap of the device could indicate "start new driver" mode or any number of "taps" could indicate other pre-programmed features of the device.

Alternatively, the present invention may also have a mode button to allow the user to select other pre-programmed features of the device.

In the present invention an accelerometer is used to measure the acceleration, deceleration and direction forces in all three axes. The magnitude of the resulting force can be measured by vector summing the three axis of the accelerometer together.

The accelerometer provides an output voltage that is linearly proportionally to the measured force, where 1g could equal 1V, in some accelerometers the scale or sensitivity of the accelerometer can be set so that larger g's can be measured.

Alternatively, the scale or sensitivity of the accelerometer may be set so that smaller g's can be measured where 0.5g will equal 1V.

The output signals from the accelerometer are analogue signal processed, after analogue processing the signals are converted to the digital domain using an analogue to digital converter. Once in the digital domain digital signal processing is applied to the signals before processing by the microprocessor.

Alternatively the output signals from the accelerometer may be processed entirely the analogue domain.

The output from the microprocessor is a single value, which represents the level of acceleration or deceleration in all directions.

This value is used to represent the overall driving style; a low value represents good driving and is mapped to a particular colour; green. A high value represents bad driving and is mapped to a particular colour; red.

Once the colour mapping has been performed the values are displayed by a colour display, in the present invention this is a multicolour LED, or individual LED's, or can be any other display media.

A colour mapping algorithm takes the measured driving style and maps it into a number of different states, LED's can be mixed such that when the green LED and red LED is on together yellow is produced. The colour mapping algorithm also controls the luminous intensity of the colour display, giving a combination of the LED luminosity between zero and 100% to produce a spectrum of colours.

### 4. DESCRIPTION OF THE PREFERRED EMBODIMENT

The previously described features of the present invention, which are believed to be novel, are set forth in the appended claims. The invention and its advantages may be best understood with reference to the following description and the accompanying drawings:

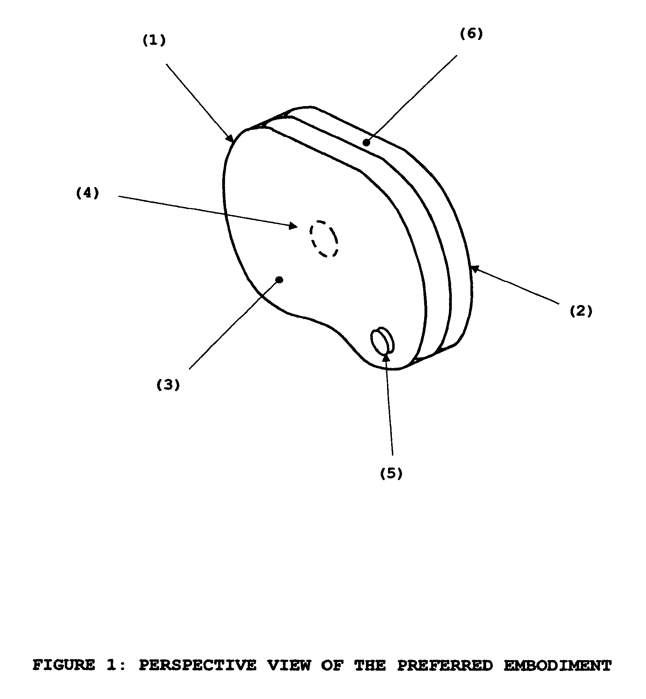

Referring to the Figures, and particularly to Figure. 1, This shows a Portable Driving Aid constructed in accordance with the present invention having a top cover (1), a rear cover (2), a display window (3), LED (4), a re-set button (5) and a charging section (6).

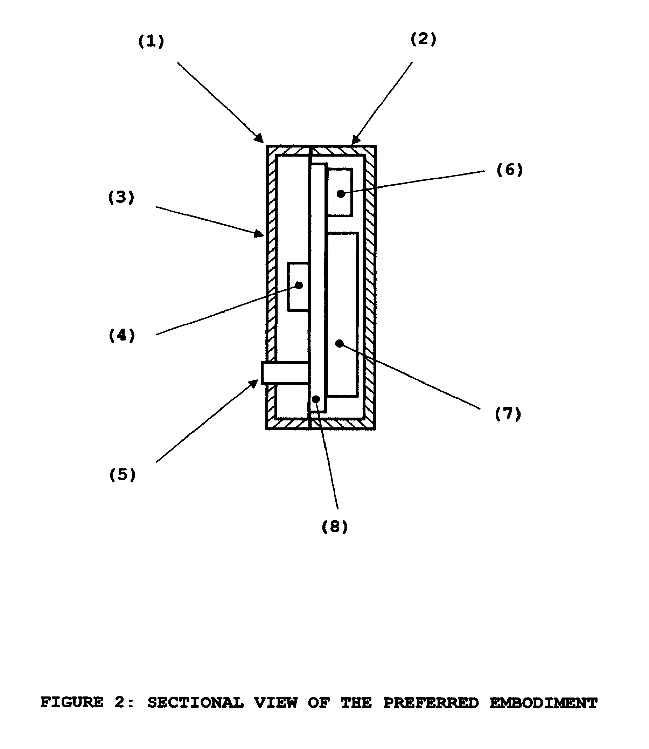

Figure. 2, shows a Portable Driving Aid constructed in accordance with the present invention having its perspective view shown in Figure 1 where the rear cover (2) has an internal electronic PCB assembly (8), protected by a top cover (1) and display window (3). The internal electronic PCB assembly (8) may have associated processor and controller circuitry, a LED (4) a charging circuit (6), and rechargeable battery (7).

The front cover (1) and rear cover (2) are preferably made from a plastic material such as ABS or similar, and may also be translucent. The front cover (1) is designed such that the coloured output displayed via the LED (4); can be viewed by the user whilst driving a motor vehicle.

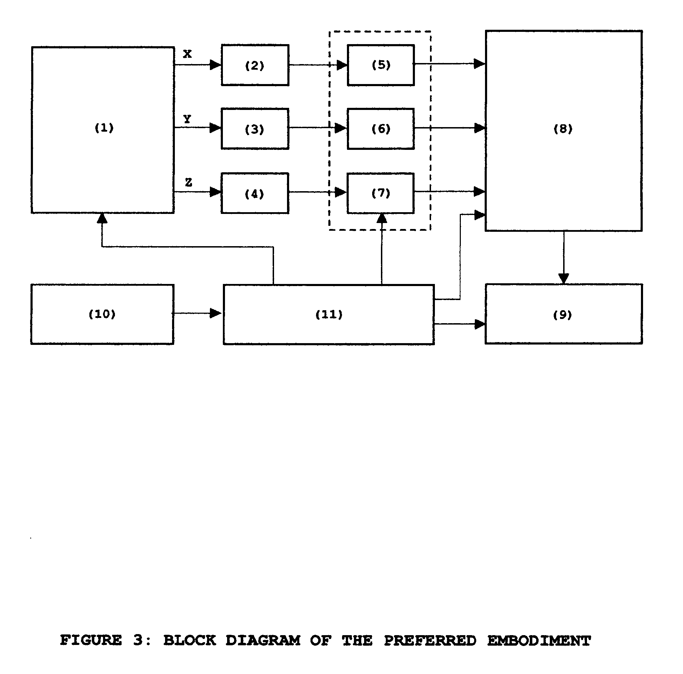

Figure. 3, showing a 3-axis accelerometer (1) where each of the output signals (X), (Y), and (Z) are analogue signalled processed ASP (2), ASP (3), and ASP (4).

The outputs from the analogue signal processing blocks ASP (2), ASP (3), and ASP (4) are feed into analogue digital converters ADC (5), ADC (6) and ADC (7) before processing by the microprocessor (8). The microprocessor (8) maps the signal using an algorithm, to display the colour of the driving style on the display (9).

A charging circuit (10) conditions the incoming voltage and provides the inputs to the battery (11).

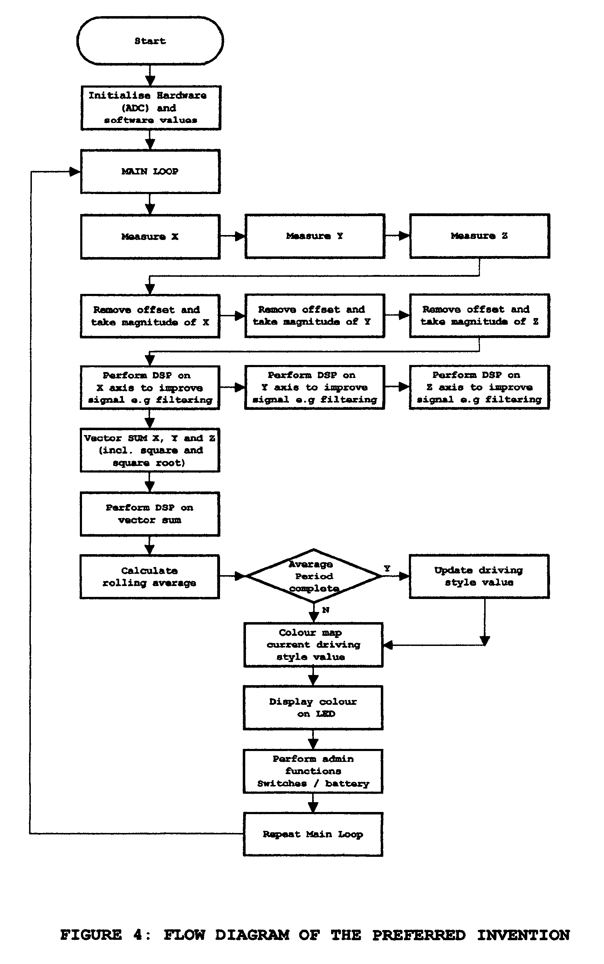

Figure. 4, shows a flow diagram of the routine executed by the Microprocessor (8). The flow diagram shows the necessary blocks to achieve the required functionality of the invention.

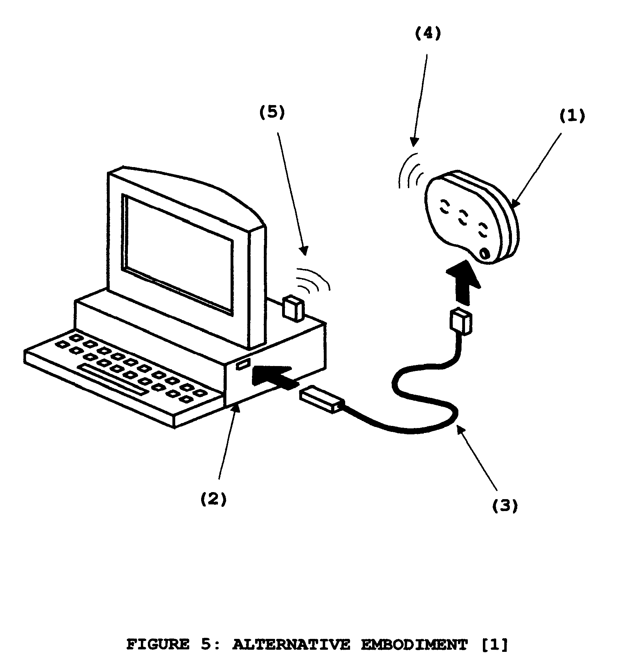

Figure. 5, shows an alternative embodiment of a Portable Driving Aid (1) connected to a personal computer (2) via a cable (3) or by wireless protocol from the driving aid (4) to a wireless protocol on a personal computer (5).

The device may be temporarily removed from the vehicle and connected to a personal computer via a cable, USB; alternatively the device may be connected using a wireless protocol; Bluetooth (RTM) or infra-red, this may allow the user to either download data from the alternative embodiment of the present invention to a personal computer or other well known electronic apparatus or alternatively the user may upload data to the alternative embodiment of the present invention, in the form of new software updates.

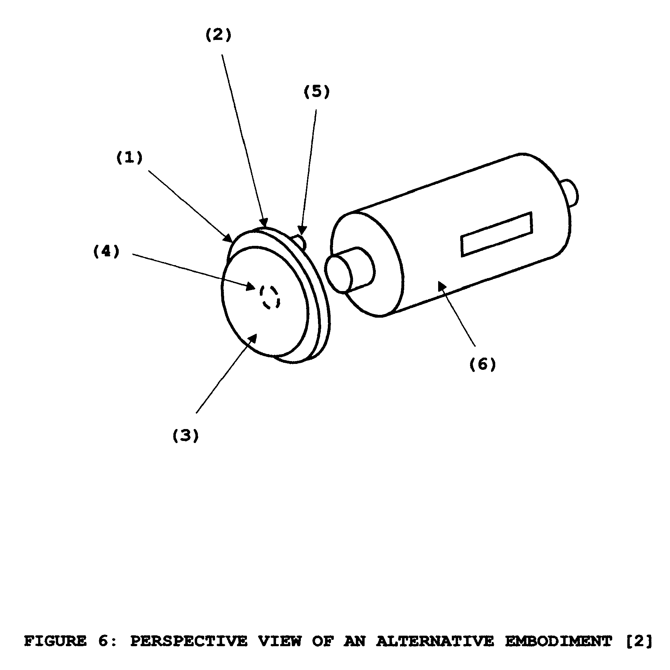

Referring to the Figures, and particularly to Figure. 6, showing an alternative embodiment of a Portable Driving Aid having a top cover (1), a rear cover (2), a display window (3), LED (4), a re-set button (5) and a charging section (6).

In this alternative embodiment the present invention can be detached or re-fitted to the charging section (6), in this form the present invention may be fitted to any vehicle having an industry standard cigarette lighter socket.

The lighter socket provides a universal means of attaching the driving aid within a vehicle; and also provides electrical power and/or a battery charging method.

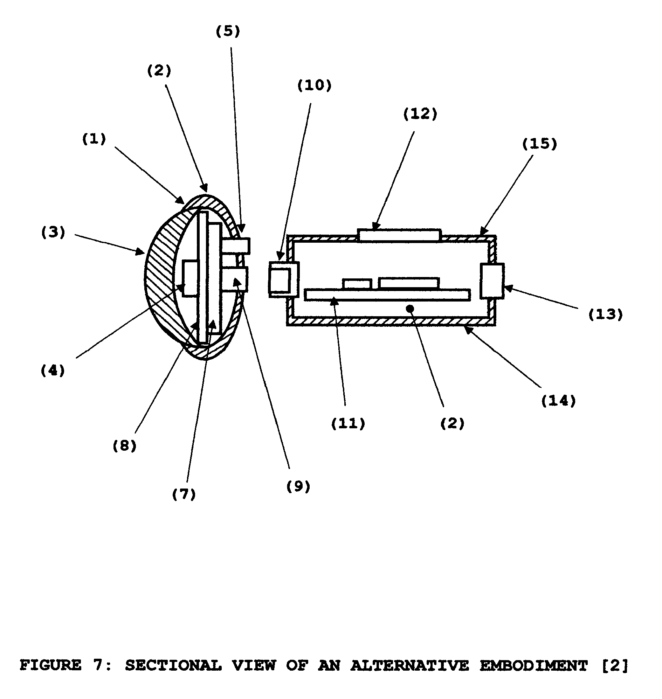

Figure. 7, shows an alternative embodiment of a Portable Driving Aid in accordance with the present invention having its perspective view shown in Figure 6, where the rear cover (2) has an internal electronic PCB assembly (8), protected by a top cover (1) a display window (3).

The internal electronic PCB assembly (8) may have associated processor and controller circuitry, a LED (4), a re-set button (5), a rechargeable battery (7) and an interface connector plug (9).

The front cover (1) and rear cover (2) are preferably made from a plastic material such as ABS or similar, and may also be translucent.

The front cover (1) is designed such that the coloured output displayed via the LED (4); can be viewed by the user whilst driving a motor vehicle.

The charging section (2) has an internal charging circuit (11), protected by a right hand side cover (14) and a left hand side cover (15). The charging section (2) has an interface connector socket (10) a bottom connection wiper (13) and side connection wiper (12).

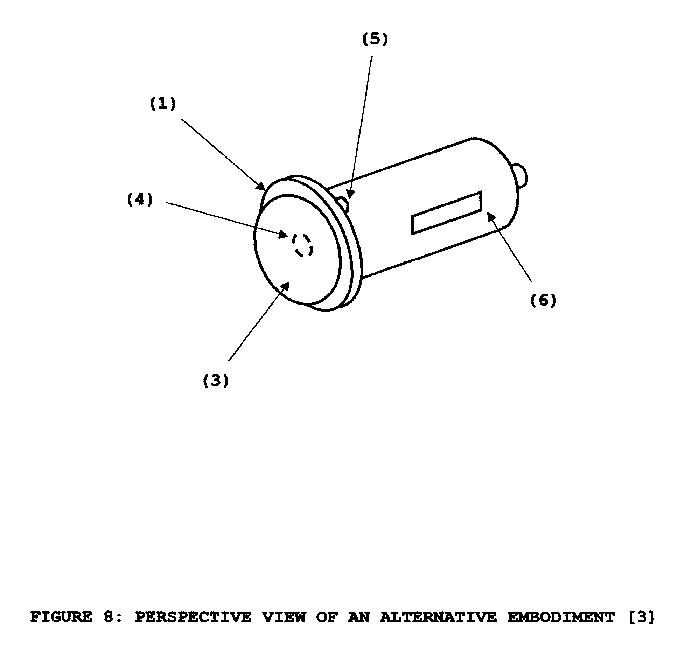

Figure. 8, shows an alternative embodiment of a Portable Driving Aid in, incorporating a top cover (1), a display window (3), LED (4), a re-set button (5) and a stalk (6).

In this alternative embodiment the present invention can be fitted to any vehicle having an industry standard cigarette lighter socket.

The lighter socket provides a universal means of attaching the driving aid within a vehicle; and also provides electrical power and/or a battery charging method.

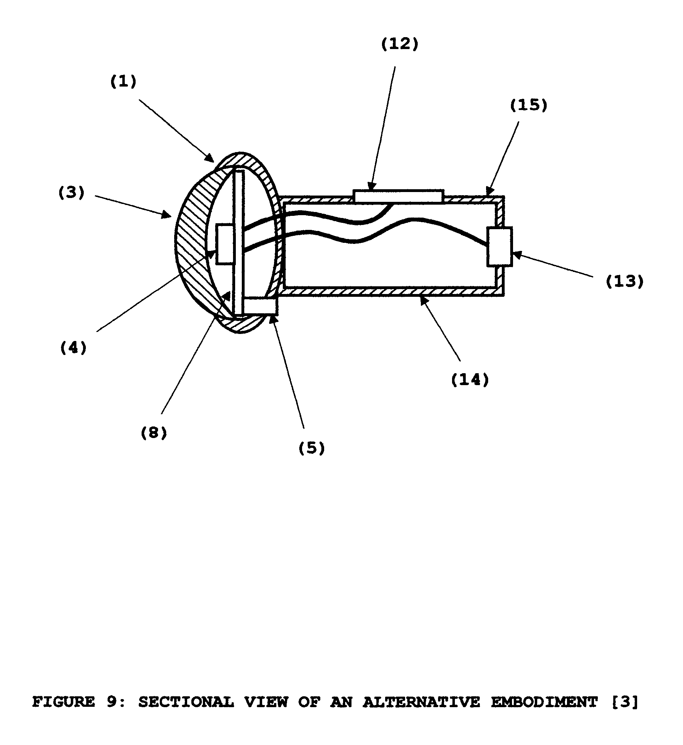

Figure. 9, shows an alternative embodiment of a Portable Driving Aid in accordance with the present invention having its perspective view shown in Figure 8, having a right hand cover (14) and left hand cover (15), a bottom connection wiper (13) and side connection wiper (12), an internal electronic PCB assembly (8) protected by a top cover (1) and a display window (3).

The internal electronic PCB assembly (8) may have associated processor and controller circuitry, a LED (4), a re-set button (5).

The front cover (1) and left and right hand covers (14) and (15) are preferably made from a plastic material such as ABS or similar, and may also be translucent.

The front cover (1) is designed such that the coloured output displayed via the LED (4); can be viewed by the user whilst driving a motor vehicle.
In this alternative embodiment the present invention can be fitted to any vehicle having an industry standard cigarette lighter socket.

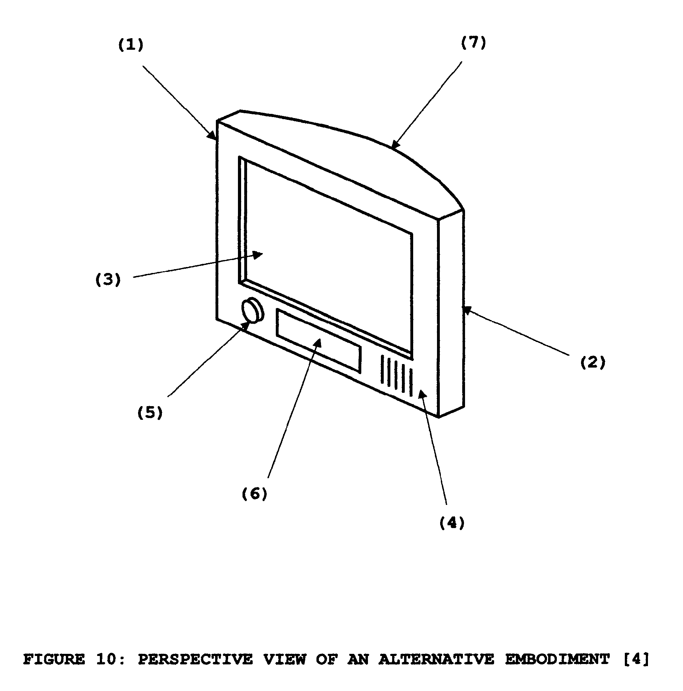

Figure. 10, shows an alternative embodiment of a Portable Driving Aid in, incorporating a speaker, a digital display, LCD display and mode button, where the driving aid constructed in accordance with the present invention having a top cover (1), a rear cover (2), high visibility colour LCD display (3) a speaker (4) a mode switch (5) and digital display (6) and a charging section (7).

The speaker can be used to indicate a change in the driving style, if the driving style suddenly degrades then the user will hear a warning in the form of an audible tone.

The digital display may also incorporate other information, enabling the device to be used, as a stopwatch, timepiece or to display historical driving style data.

## Claims

1. A portable driving aid that provides the user with information on their driving style by means of a colour changing indicator, by which the variable blend of colour and luminous intensity presents to the user an update of their instantaneous, periodical and accumulated driving style, the colours and colour sequencing are determined by the measured acceleration forces acting in 3 axis and then processed in terms of their magnitude and direction, by the pre-programmed algorithm and then presented by the colour mapping algorithm.

2. A driving aid as presented in claim 1, that shows a variable blend of colour to denote the driving style of the user, where a pre-determined colour or any number of colours will represent poor driving and another pre-determined colour or any number of colours will represent good driving, any change in the displayed colour or colours denotes an improvement or degradation in the driving style of the user.

3. A colour mapping algorithm as presented in claim 1, which takes the value representing the driving style and maps it into a number of different states, where by the individual colour sources of the colour display are controlled such that mixing colours of varying luminous intensity between 0% and 100% produces a spectrum of colours.

4. A driving aid as presented in claim 1, which also provides a sudden pulse colour, where the pulse is distinguished by a change in luminous intensity, indicating that the driving style has recently improved or degraded.

5. A driving aid as presented in claim 1, where the accelerometer provides an output voltage that is linearly proportionally to the measured force.

6. A driving aid as presented in claim 1, which takes a force from the accelerometer and equates this to a voltage, each axis of the accelerometer is processed and combined to generate a single value, by the pre-programmed algorithm, which represent the current driving style and is used within the colour mapping algorithm for the control of the colour display.

7. A driving aid as presented in claim 1, that uses the function of the accelerometer as a user interface where, if desired, different modes can be selected by the user tapping the device; where "one" short tap to the device indicates "start new driver" mode, and any number of "taps" would indicate other pre-programmed features of the device.

8. A driving aid as presented in claim 1, which performs automatic self-calibration by using the earth's gravity as a known acceleration vector to orientate itself independently of both the user and vehicle, allowing it to be installed in any orientation and therefore requires no user calibration.
